# EUROPEAN PATENT APPLICATION

(11) **EP 4 309 506 A1**
(43) Date of publication of application: **24.01.2024**
(21) Application number: 23186931.4
(22) Date of filing: 21.07.2023
(51) Int. Cl.: A23D 9/007, A23D 9/04, C11C 3/00, B01J 19/10

(54) **IMPROVED DEVICE FOR LIPID MATRICES GASIFICATION IN A TEMPERATURE CONTROLLED ENVIRONMENT**

(30) Priority: 22.07.2022 IT 202200015468
(71) Applicant: Tarullo, Angelo, 70020 Toritto (Bari) (IT)
(72) Inventor: TARULLO, FRANCESCO ROCCO, 70020 TORITTO (BA) (IT); TARULLO, NICOLA MARIA, 70020 TORITTO (BA) (IT); CALDERONI, VINCENZO, 70024 GRAVINA IN PUGLIA (BA) (IT)
(74) Representative: Russo, Dimitri

(57) **Abstract**

An object of the present finding is an enhanced process for the gasification of one or more natural or synthetic lipid matrixes in controlled temperature times and environments, in order to obtain molecules or new chemical compounds or improve the chemical and/or physical characteristics of the used lipid matrixes. Particularly, the method has the object to obtain a notably higher number of ozonides or bioactive agents with respect to the common ozonization methods.

## Description

An object of the present finding is an enhanced apparatus for the gasification of one or more natural or synthetic lipid matrixes in controlled temperature times and environments, in order to obtain molecules or new chemical compounds or improve the chemical and/or physical characteristics of the used lipid matrixes, stabilizing and synergizing, or enhancing them by adding new substances never described in the prior art.

The molecules or said new compounds or said improved matrixes, obtained by the enhanced gasification apparatus, are to be used in the medical therapeutic, pharmaceutical, cosmetic field, or as dietary supplement, for human and veterinary use, for antibacterial, antineoplastic, antifungal, virustatic, immunomodulatory, and anti radicalic therapies, or much more, or in agri-food and chemical industrial sectors.

The main object is to provide an enhanced gasification apparatus that, using a higher number of gas molecules in contact with the lipid matrixes in controlled temperature environment, allows to obtain the following innovations with respect to all the gasification processes known so far:
1- the reaction of the gas with the lipid matrix (saturation) occurs in a notably shorter time (4 hours versus 12 hours) with lower production energetic costs;
2- the new molecules or chemical compounds (ozonides or bioactive agents) are obtained in greater number, about twice;

Particularly, an object of the present finding is to provide an enhanced apparatus suitable for obtaining the reaction of a lipid matrix consisting, for example, of extra virgin olive oil, rapeseed oil, sunflower seed oil, almond oil, argan oil, essential oils, mono- or poly-unsaturated fat acids such as ascorbic acid, oleic acid, linoleic acid, linolenic acid, some FAEE, Fatty Acid Ethyl Esters, terpenes, with ozone or other gases, by bubbling the latter into a new-conception reactor. Such gases can be ozone, carbon monoxide, medical gases, or isotopes thereof.

The apparatus according to the present invention, allows one or more gases to be simultaneously or sequentially bubbled, compatibly with the chemical-physical properties of the various gases, in order to avoid damaging conditions for the operators and the environment.

A further object of the present apparatus is to allow the reaction between the gas molecules (O3, NO, CO, etc.) within a lipid matrix consisting, for example, of mono- or poly-unsaturated fat acids such as ascorbic acid, oleic acid, linoleic acid, linolenic acid, (FAEE -Fatty Acid Ethyl Esters), terpenes or the like, under control of the temperature, with variable delivery flow rate depending on the gas used. Such lipid matrixes, once reacted with the above-mentioned gases, originate new molecules or new compounds (for examples, ozonides or bioactive agents).

A further object of the present patent application is to provide an apparatus which allows to obtain new molecules or new compounds (ozonides or bioactive agents) which are not susceptible of instability when left at room temperature. Indeed, it is known that the new molecules or new compounds (ozonides or bioactive agents), due to their instability, require to be stabilized in order to avoid the degradation thereof.

In order to demonstrate this, the apparatus was subjected to model experimentation, commissioned by us, for merely exemplary but non-limiting purposes. Ozone was used as a gas, obtained through a partial oxygen dissociation into an ozonizer consisting of an appliance generating a small electric discharge in oxygen 99.9 % forming a mixture composed by 20 - 25 % ozone and 75 - 80 % oxygen and bubbled in the lipid matrix consisting of a FAEE. The new molecules or new compounds (ozonides or bioactive agents) obtained by the above reaction, as known, are measurable in a lipid matrix gasified in m_{eq} O₂/Kg, said measurement also being referred to as "Peroxides Index".

In order to compare the results obtained by the apparatus of the prior art with respect to that object of the present invention 4 tests were performed, 2 by using known apparatuses which involves the simple gas bubbling in a lipid matrix, without the presence of glass beads and without the aid of the ultrasound mechanical stirring and 2 by using the new apparatus. The results of the quantitative analyses of ozonides, expressed as m_{eq} O₂/Kg, are reported below.

Such experimental tests differ by the content of ozonides expressed as m_{eq} O₂/Kg. Indeed, many more ozonides expressed as m_{eq} O₂/Kg will be found in the two experimental tests carried out with the apparatus according to the present invention, compared to the other two experimental tests carried out with classic reactors, it is specified that the lipid matrixes were consisting of a FAEE, while the used gas was ozone, in all four experimental tests being carried out.
- **Gasification with new apparatus:** Ozoactive 1 - Test report n° 20LA16741 issued on 14/08/2020, Batch L. SM310720144H; Result **822** m_{eq} O₂/Kg.
- ***Gasification with prior art apparatus***: Ozoactive 2 - Test report n° 20LA16743 issued on 14/08/2020, Batch L. SM310720184H; Result **449** m_{eq} O₂/Kg.
- **Gasification with new apparatus**: Ozoactive 3 - Test report n° 20LA16747 issued on 14/08/2020, Batch L. SM310720194H; Result **740** m_{eq} O₂/Kg.
- ***Gasification with prior art apparatus***: Ozoactive 4 - Test report n° 20LA16749 issued on 14/08/2020, Batch L. SM310720198H; Result **357** m_{eq} O₂/Kg.

From the cited reports, it should be noted that the lipid matrix gasified by the apparatus according to the present invention, has a Peroxides Index equal to 822 m_{eq} O₂/Kg (report attached above), or about twice the results obtained by the traditional apparatuses.

In conclusion, the results obtained in this experimentation are very suggestive and underline significant aspects of analytical evaluation and strong innovative impact, such as to justify the subsequent prosecution of the research activities, with both the same and other elements, having different reaction capabilities.

The invention is described below, according to a non-limiting preferred embodiment of further developments susceptible of all the modifications or variations with innovative elements, technically equivalent and all falling within the inventive concept, through the aid of the attached drawings, which illustrate:

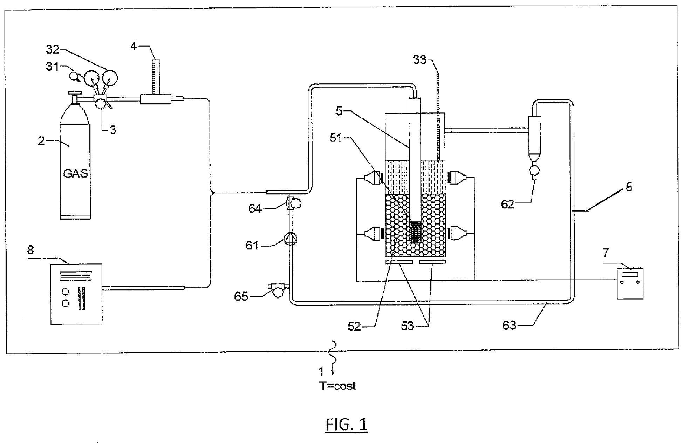

Fig. 1, a scheme which summarizes all the components of the apparatus. With reference to figure 1, the apparatus according to the present invention, consists of:
   - a gas generator 2, such as for example O₃, consisting, for example, of an already cooled cylinder arranged for medical use, possibly without welding;
   - an ozonizer 8, only in the case in which the used gas is ozone;
   - an outlet pressure regulator 3 (pressure switch);
   - a detector (pressure gauge) of the generator pressure 31;
   - a detector of the operating pressure 32;
   - a device for controlling the temperature (thermometer) 33;
   - a flowmeter 4 to detect information on the volume quantity per unit of time, or a mass flow controller, which allows to control the delivery of the gas quantity according to very small flow rates and under electronic control;
   - a glass scrubber 5 hermetically sealed and cooled or alternatively made of stainless steel with double chamber with a coil cooling system, a Peltier cell cooling system 53, etc.;
   - a membrane with porous isthmus or porous barrel 51 made of steel which allows a greater distribution promoting the non-aggregation of the gas;
   - a series of glass rings or beads 52 for filling the glass scrubber 5; whose object is to slow down the ascent of the gas bubbles to increase the contact surface and time between the gas and lipid matrix;
   - an outlet gas recirculation system 6 comprising a pump 61, a valve for recovering possible oil vapours 62, tubing 63, a gas recycling valve 64, a gas outlet valve 65;
   - the fitting and tubing 63 for making the various circuits are made of AISI 316 steel to ensure the resistance to reactive gases attack;
   - an ultrasound generator 7 able to generate the frequencies comprised between 18,000 and 45,000 Hz;

The device is within a controlled temperature environment 1.

All the components described above can be replaced by elements with equivalent functions.

The apparatus is arranged so that the gas contained in the cylinder 2 is ejected adjusting the pressure in barg (bar gauge, related to the atmospheric pressure), by means of a pressure regulator 3, so that it can bubble in a controlled manner in the oily matrix.

An optimal outlet pressure of the gas so that an effective bubbling can occur, is comprised between 0,1 barg and 0,4 barg. The gas flow rate, before entering the barrel 5 for bubbling, is detected by the flowmeter or by the mass flow controller 4 and the temperature by a thermometer 33. The delivery of such gas mixture is adjusted on 27 g/h. The detection of the above-mentioned parameters (pressure, volume, mass) allows the mass of the gas bubbled in the lipid matrix to be calculated per unit of time (calculated in gr/min or any other unit of measurement).

The bubbling of ozone or other gas in the lipid matrix involves on one hand the solubilization of the gas in the latter and on the other hand the chemical reaction between the carbon-carbon double bonds of the matrix itself and thus the formation of new molecules with respect to the initial reacting molecules, i.e., ozonides.

It was thus required that all the new molecules or new compounds (ozonides or bioactive agents) be stabilized and possibly synergized considering their strong instability. For this reason, a compound formed by Disodium EDTA, Tocopherol and Ascorbyl Tetraisopalmitate with concentration ranging from 1.20 % to 2.5 % has been added immediately after the reaction occurred between gas and lipid matrix. Obviously, we chose to stabilize and synergize all the new molecules or new compounds (ozonides or bioactive agents) obtained by the new apparatus is specifically Ozoactive 1 as in Test report n° 20LA16741 issued on 14/08/2020, Batch L. SM310720144H with Result 822 meq O₂/Kg, i.e., those in greater number, about twice the known techniques. It is specified that the stabilization with this compound is totally innovative and never described. Indeed, in the other known techniques, the stabilization is obtained only by alpha lipoic acid and Vitamin E.

Furthermore, in order to synergize the new molecules or new compounds (ozonides or bioactive agents) still Ozoactive 1 with 822 m_{eq}O₂/Kg an amino acid pool consisting of L Arginine, L Glutamine and L lysine in a concentration ranging from 0.1 % to 0.3 % has been further added. This addition has never been described in the other known techniques either.

The new molecules or new compounds (ozonides or bioactive agents) thus produced, stabilized, and synergized require an experimental verification on the cytotoxic, pro-sensitizing, and allergizing potential. For this purpose, studies on engineered tissues (in vitro) have been conducted, which decreed the non-toxicity, non-sensitization, and non-allergization. Such studies have been commissioned by us and conducted by Macrofarm - Spinoff of University of Calabria - Department of Pharmacy and Health and Nutrition Sciences:
- **Test 1 CYTOTOXICITY (Gasification with new apparatus):**
   Ozoactive-1 **SM3107204H**
   Performed on 04/12/2020.
   BIOLOGICAL EVALUATION OF A MEDICAL DEVICE CYTOTOXICITY TEST Neutral Red
   Uptake Assay
   **Result: NON-CYTOTOXIC**
- **Test 2 PRO-SENSITIZATION (Gasification with new apparatus):**
   Ozoactive-1 **SM3107204H**
   Contextually performed in December 2020.
   IN VITRO ANALYSIS OF THE PRO-SENSITIZING POTENTIAL OF A MEDICAL DEVICE
   **Result: NON-SENSITIZING**
- **Test 3 SKIN IRRITATION (Gasification with new apparatus):**
   Ozoactive-1 **SM3107204H**
   Performed on 07/12/2020.
   IN VITRO SKIN IRRITATION: HUMAN SKIN MODEL TEST FOR THE EVALUATION OF SKIN IRRITATION
   **Result: NON-IRRITATING**

As known, a lack of oxygen (O2) in an organ affected by a pathology causes an accumulation of non-oxidated (toxic) metabolic intermediate products both in the cell and in the extracellular liquids. In this situation, the bio-activators are crucial, especially in skin pathologies, being substances able to aid the cellular respiration and able to convey more oxygen, they determine the recovery thereof.

Among the main substances with such characteristics, there are ozonides which result extremely effective and do not have secondary effects due to the modern technology by which they are produced (both for the high number and for being stabilized and synergized by adding new substances never described in the prior art). The ozonides are obtained by the reaction between natural origin substances (lipid matrixes) as a non-limiting example: lipid extracts of aromatic herbs, extra virgin olive oil, rapeseed oil, sunflower seed oil, almond oil, argan oil, essential oils, mono- or poly-unsaturated fat acids such as ascorbic acid, oleic acid, linolenic acid, some (FAEE) and terpenes with ozone. Furthermore, through the dissolution of Ozonides in acid environment, metabolites, Bio peroxides, which are able to activate the endogenous antioxidant system inducing the production of scavenger enzymes, with anti radicalic action, are generated. However, being very instable molecules, they can be quickly degraded if not stabilized.

The obtained compounds, particularly ozonides stabilized and synergized by the enhanced apparatus, have a greater capability to increase the cellular respiration potential gradually acting on tissues. It is known that among the main vital functions of the cells, the respiratory function is among the most important; when the respiratory processes decrease, the metabolic, reproductive processes and the cellular growth are also negatively affected. Indeed, in experimental data of the case report (photographic) of the skin lesions treated herein, the complete recovery occurred more effectively and especially more quickly than all gold standards used in these pathologies both in the form of ozonized medical products with other methods and even regarding other non-ozonized advanced pharmaceutical medications.

The new molecules or new compounds (ozonides or bioactive agents) thus produced, stabilized, and synergized by adding new substances never described in the prior art.

New molecules, i.e., Ozoactive 1 with 822 m_{eq}O₂/Kg, in experimental animals, have been further evaluated in a study commissioned by us by means of experimental verification on the possible toxicity through oral administration of the above-mentioned. For acute toxicity studies, Wistar female rats weighing 250-300 g have been used. The animals have been treated in accordance with the guidelines of Directive of the European Community Council for curing and using laboratory animals:
**Test ORAL ACUTE TOXICITY (Gasification with new apparatus):**
Ozoactive-1 **SM3107204H**
Performed on 15/12/2022.
ORAL ACUTE TOXICITY STUDIES OF THE COMPOUND OZOACTIVE 1

**Result** The estimated lethal dose (DL50) of Ozoactive agent was higher than 5000 mg/kg and no adverse effects were observed after 14 days. On the basis of these results, **OZOACTIVE-1 RESULTED SAFE** showing no acute oral toxicity up to 5000 mg/Kg in Wistar female rats.

## Claims

1. Enhanced apparatus for the gasification of lipid matrixes in controlled environment and temperature, comprising a controlled temperature environment (1), a gas generator (2), an outlet pressure regulator (3), a pressure detector (31) of said gas generator (2), a detector (32) of the operating pressure, a dedicated flowmeter or a mass flow controller (4) based on the gas type, a scrubber (5) provided with a membrane with porous isthmus (51), with a adjustable stirring device at the base and with the possibility of controlling the temperature by means of a thermometer (33), a gas recirculation system (6), and an ultrasound generator (7), operating at a frequency comprised between 18,000 and 45,000 Hertz, suitable for subjecting a lipid matrix M to mechanical stirring, **characterized in that** inside the scrubber (5) there are means to slow down the ascent of the bubbles of the at least one gas inputted into the scrubber (5) itself.

2. Enhanced apparatus for the gasification of lipid matrixes in controlled environment and temperature according to claim 1, **characterized in that** the means to slow down the ascent of the bubbles of the at least one gas inputted into the scrubber (5) are glass beads.

3. Enhanced apparatus for the gasification of lipid matrixes in controlled environment and temperature according to claim 1, **characterized in that** the means to slow down the ascent of the bubbles of the at least one gas inputted into the scrubber (5) are glass rings.

4. Enhanced apparatus for the gasification of lipid matrixes in controlled environment and temperature, according to the preceding claims, **characterized in that** the gas contained in the gas generator (2) is inputted, at a determined controlled pressure, depending on the gas used (O₃, NO, CO ecc.), in relation to its own solubility characteristics, in the lipid matrix M inside the scrubber (5), lipid matrix M, alternatively consisting of one of the following elements: lipid extracts of aromatic herbs, extra virgin olive oil, rapeseed oil, sunflower seed oil, almond oil, argan oil, essential oils, mono- or poly-unsaturated fat acids such as ascorbic acid, oleic acid, linoleic acid, linolenic acid, (FAEE -Fatty Acid Ethyl Esters), terpenes or the like.

5. Enhanced apparatus for the gasification of lipid matrixes in controlled environment and temperature, according to the preceding claims, **characterized in that** molecules obtained by the scrubber (5) are synergized by adding an amino acid pool consisting of L Arginine, L Glutamine and L lysine in a concentration ranging from 0.1 % to 0.3 %, and by subsequently adding, in order to stabilize them, a compound formed by Disodium EDTA, Tocopherol and Ascorbyl Tetraisopalmitate with concentration ranging from 1.20 % to 2.5 %.

6. Enhanced apparatus for the gasification of lipid matrixes in controlled environment and temperature, according to the preceding claims, **characterized in that** the leaking pressure of the gas mixture is comprised between 0.1 and 0.4 barg.

7. Enhanced apparatus for the gasification of lipid matrixes in controlled environment and temperature, according to the preceding claims, **characterized in that** the leaking flow rate of the gas mixture is 27 g/h.
